# EUROPEAN PATENT SPECIFICATION

(11) **EP 2 161 943 B1**
(45) Date of publication and mention of the grant of the patent: **03.05.2017**
(21) Application number: 08305535.0
(22) Date of filing: 08.09.2008
(51) Int. Cl.: H04Q 3/00, H04L 12/24

(54) **Method for remotely managing devices, devices and systems related thereto**
Verfahren zur Fernverwaltung von Geräten, Geräte und dazugehörige Systeme
Procédé pour la gestion de dispositifs à distance, dispositifs et systèmes correspondants

(43) Date of publication of application: 10.03.2010
(73) Proprietor: ALCATEL LUCENT, 92100 Boulogne-Billancourt (FR)
(72) Inventor: Bouchat, Christele, 2060 Antwerpen (BE)
(74) Representative: ALU Antw Patent Attorneys

(56) References cited:
- EP-A- 1 746 767
- EP-A- 1 927 919
- EP-A- 1 944 902
- WO-A-2007/014369

## Description

### Technical field of the invention

The present invention relates to the field of method for remotely managing user devices as Client Premises Equipment (CPE) (e.g. optical network units), user devices (CPE) (e.g. optical network units) and other devices related thereto.

### Background of the invention

The Broadband Forum (previously named DSL Forum) is an international industry consortium of service providers, equipment and component manufacturers and other interested parties, focussing on developing broadband DSL. The Broadband Forum develops technical specifications and indirectly standards that enable delivery of DSL products and services. More information about the Broadband Forum is available from its internet site http://www.broadband-forum.org/.

One of those technical specifications is the Broadband forum's Technical report TR-069 (e.g. issue 1, amendment 2, dating from December 2007, specifying the CPE WAN Management Protocol (also referred to as CWMP or TR-069). The TR-069 Management Protocol and corresponding network architectures allow communication between a Customer Premises Equipment (CPE) and an automatic configuration server (ACS). It defines a mechanism that encompasses secure auto-configuration of a CPE by means of an automatic configuration server (ACS), which is typically located at the operator side, and also incorporates other CPE management functions into a common framework.

Today Optical network Unit (ONU / ONT) devices are mainly Layer 1 / Layer 2 (or physical layer/link layer) devices. The L1/L2 management is typically performed by means of the OMCI FSAN protocol as defined in ITU, which is used between a master (in the OLT-Optical line termination) and a slave (in the OTU/ONT). Adding further functionalities to be managed through OMCI has as a consequence a substantial change in the master as well (i.e. the OLT).

In the Broadband Forum Specification TR-142, "Framework for TR-069 enabled PON devices" (e.g. issue 1.0, dating from March 2008), it is described how an ACS can configure, troubleshoot, and manage layer 3 functionalities of a PON ONT using TR-069. Provisioning the CPE (e.g. ONU/ONT) with a TR-069 client in a straightforward way would increase memory and CPU usage and thus cost of the CPE, which is preferably avoided.

There is a need for alternative solutions for remotely managing CPE devices which is compatible with the by the Broadband Forum's defined Auto Configuration Server (ACS), especially for relatively simple devices.

In EP 1 927 919 a management method for server customer communication is disclosed.

In EP 1 944 902 a method for impulses noise monitoring, related network terminal, network node and network manager are disclosed.

In WO 2007/014369 a provisioning mechanism is disclosed which is installed at the customer premise equipment device capable of voice over packet communication and which permits provisioning of the customer premise equipment device by an autoconfiguration server.

In EP 1 746 767 a method for configuration management to a customer premise equipment and the system therefore is disclosed.

### Summary of the invention

When terms as "first", "second", "third" and the like are used, this does not necessarily mean that a sequential or that a chronological order is to be assumed.

The term "comprising", should be interpreted as such that it does not exclude other elements or steps.

For the purpose of the present invention, the following terminology has been used,
- **ACS** Auto-Configuration Server. This is a component in the broadband network responsible for auto configuration of the CPE for advanced services;
- **B-NT** Broadband Network Termination, for any WAN-side access technology;
- **CPE** Customer Premises Equipment, as defined in TR-069;
- **ODN** Optical Distribution Network. In the PON context, a tree of optical fibers in the access network, supplemented with power or wavelength splitters, filters, or other passive optical devices;
- **OLT** Optical Line Termination. A device that terminates the common (root)endpoint of an ODN, and implements a PON protocol, such as that defined by ITU G.984. The OLT provides management and maintenance functions for the subtended ODN and ONUs;
- **ONT** Optical Network Termination. A single subscriber device that terminates any one of the distributed (leaf) endpoints of an ODN, and implements a PON protocol. An ONT is an ONU used in Fiber-To-The-Home and Fiber-To-The-Building cases;
- **ONU** Optical Network Unit. A generic term denoting a device that terminates any one of the distributed (leaf) endpoints of an ODN, and implements a PON protocol. This component is located in the field. The ONU provides the optical to electrical (O-E) and electrical to optical (E-O) conversion between the fiber and the copper wires that reach homes and offices in a "fiber to the curb" (FTTC) or "fiber to the neighborhood" (FTTN) scenario.
- **PON** Passive Optical Network
- **RPC** Remote Procedure Call
- **Encryption** is the process of transforming information (referred to as plaintext) using an algorithm (called cipher) to make it unreadable to anyone except those possessing special knowledge, usually referred to as a key. The result of the process is encrypted information (in cryptography, referred to as ciphertext). In many contexts, the word encryption also implicitly refers to the reverse process, decryption (e.g. "software for encryption" can typically also perform decryption), to make the encrypted information readable again (i.e. to make it unencrypted).
- **Encoding** is the process of transforming information from one format into another. The opposite operation is called decoding.

The state of the art discloses a method, on which the preamble of claim 1 is based, for automatically configuring an OTU/ONT device by means of the remote management protocol TR-069 and at least one automatic configuration server (ACS), the latter which is connected to said OTU/ONT device by means of an intermediate network, said intermediate network comprising an access node for said OTU/ONT which is adapted to manage said OTU/ONT by means the OMCI protocol and an external network comprising said ACS.

Providing the CPE (e.g. ONU/ONT) with a TR-069 client in a straightforward way would increase memory and CPU usage and thus cost of the CPE (e.g. ONU/ONT), which is preferably avoided.

It is an object of the present invention to provide a method for automatically configuring a CPE (ONU/ONT) device by means of the remote management protocol TR-069 and at least one automatic configuration server (ACS), according to claim 1, and corresponding CPE's (e.g. ONU/ONT's), access nodes and modules, which solves or reduces at least one of the above problems.

According to a first aspect of the present invention a method is described for automatically configuring a client premises equipment by means of the remote management protocol TR-069 and at least one automatic configuration server (ACS), the latter which is connected to the CPE device by means of an intermediate network, which comprises:
- monitoring TR-069 sessions in a TR-069 handler module located in between said CPE and ACS;
- modifying the downstream and upstream messages related to the TR-069 session in the TR-069 handler.

The TR-069 handler module can be arranged such that the Tr-069 sessions between a CPE and an automatic configuration server are passing through said handler module. A process of monitoring can comprise detecting the message type (RPC message type) or name. The process of monitoring may comprise also detecting parameter-value pair information comprised in said messages. The process of monitoring may comprise detecting parameter name information comprised in said messages.

With the term "downstream" the direction from ACS towards CPE is meant. With the term "upstream" the direction, being from CPE towards ACS, is indicated.

According to embodiments of the present invention the client premises equipment device does not need to be fully TR-069 compliant. Some of the functionalities may be omitted, as those may be performed by the TR-069 handler. This has the advantage that the CPE device or user device does not need to be provided with a relatively heavy TR-069 compliant software or module.

According to embodiments of the present invention the method further comprises compressing at least part of the downstream messages and decompressing at least part of the upstream messages in the handler module.

According to embodiments of the present invention the method further comprises decompressing/compressing the downstream/upstream messages respectively in the CPE or user device. It is to be noted that the CPE can for instance be an ONU/ONT device, in context of a PON network.

The process of compressing/decompressing may comprise encoding/decoding respectively.

The at least part of the messages which is compressed/decompressed may comprise the message names. It may comprise the parameters names.

According to embodiments of the present invention the compression/decompression process is based on redundancy of information in the TR-069 message due to already available information in the handler module (for instance access node) and/or user device (for instance CPE) from the networking layers, layer 1 and/or layer 2.

According to embodiments of the present invention the method may further comprise encrypting/decrypting the upstream/downstream messages respectively in the handler module.

According to preferred embodiments of the present invention handler module is comprised in an access node ( for instance a line multiplexer) of the home network of the CPE.
According to embodiments of the present invention the CPE and access node are comprised in a PON.

According to a second aspect of the present invention a handler module is disclosed which is adapted for being arranged in between a CPE device and an auto configuration server adapted for remotely configuring the CPE, comprising:
a. a means for monitoring TR-069 sessions passing through said handler module;
b. a means for modifying said TR-069 messages corresponding to the TR-069 sessions in said handler module.

The handler module may comprise the OLT in FSAN-ITU context.

A handler module according to the second aspect of the present invention is preferably adapted for compressing/decompressing and/or encoding/decoding the TR-069 messages downstream/upstream respectively.

The handler module according to embodiments of the present invention can be further adapted for encrypting/decrypting the TR-069 messages downstream/upstream.

According to embodiments of the present invention the handler module comprises an xml parser.

According to embodiments of the present invention further comprises a means for setting up and maintaining TR-069 sessions with at least one TR-069 compliant automatic configuration server (ACS).

The handler module can comprise a storage means adapted for storing compression and/or encoding and/or encrypting information.

According to a third aspect of the present invention an access node is disclosed which comprises a handler module according to the second aspect of the present invention.

According to a fourth aspect of the present invention a CPE device is disclosed adapted for compressing/decompressing TR-069 messages relating to an auto configuration session with an ACS upstream/downstream respectively.

Features and embodiments for the second, third and fourth aspect of the present invention, corresponding to features and embodiments of the first aspect of the present invention, are similarly considered to be within the scope of the present invention, as would be recognized by the skilled person.

The features from the dependent claims, features of any of the independent claims and any features of other dependent claims may be combined as considered appropriate to the person of ordinary skill, and not only in the particular combinations as defined by the claims.

### Brief description of the drawings

The accompanying drawings are used to illustrate embodiments of the present invention.

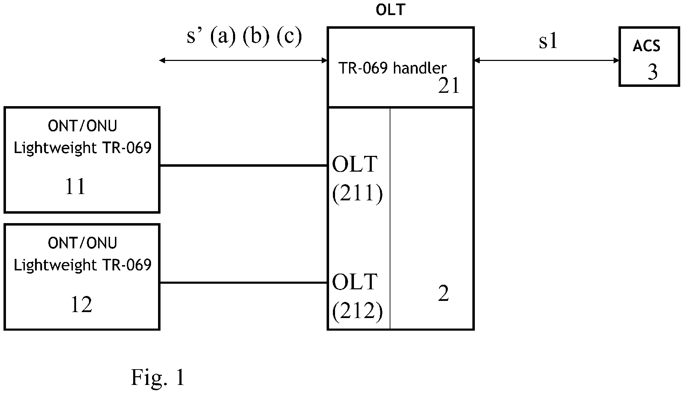

Fig. 1 illustrates embodiments of the present invention.

### Description of illustrative embodiments

According to an aspect of the present invention the complexity of a fully compliant TR-069 client on a CPE (e.g. ONT/ONU) device to achieve remote management by an auto configuration server is reduced, while keeping the memory usage and CPU usage of the client relatively low, as well as its cost.

As explained in technical report TR-142 of the Broadband Forum, the CPE WAN Management Protocol (called TR-069) can be used to remotely manage and configure parts of the ONT/ONU functionalities. A TR-069 client requires the support of SSL and/or TLS. A TR-069 client is further required to support encryption of the data. A TR-069 client is also required to support certification of an automatic configuration server (ACS). A TR-069 client must support and use an XML parser (use of SOAP messages). In the currently standardized version of TR-069, the object model also makes use of a tree structure and a full naming of the parameter, which has as a consequence that the name of one single parameter can be extremely long and can unnecessarily consume a substantial amount of memory. For example: InternetGatewayDevice.WANDevice.{i}.WANConnectionDevice.{ i}.WANPPPConnection.{i}.PortMapping.{i}.

### PortMappingLeaseDuration.

It is to be noted that the CPE can be an ONU/ONT, in the case of optical networking technology, but that aspects of the present invention may be applicable in a broader contexts, as will be recognised by the skilled person. Aspects of the present invention are also applicable in the case of a Wimax system.

In an aspect of the invention the TR-069 client to be used in the CPE (e.g. ONT/ONU) is made as light as possible ("Lightweight TR-069 client"), while still being able to use the standard auto configuration server (ACS) on the network side. In order to do so, in a certain view, a "TR-069 handler" is placed in between the "lightweight client" and the auto configuration server, preferably located at the access node, which can take over certain functionalities from the Lightweight client.

The "TR-069 handler" software or module can communicate with an auto configuration server via the standardized TR-069 protocol, hereby optionally including encryption and certification. The TR-069 handler can parse the XML messages arriving downstream for the CPE (e.g. ONT/ONU), remove the SOAP messages and encode the messages in an optimal way. It can remove the long naming of an object by a label or identifier and keep a table of those identifiers (the identifier or label can be the same for all ONT/ONU's). The TR-069 handler can communicate with the Lightweight TR-069 client via a specific management channel, that is specific for each type of transmission system (PON; WiMAx,...). For instance, a PON network can be used, and will further be explained below. In a PON system, the OLT will communicate with every single ONT by sending broadcast messages, meaning that all the ONTs of a given PON system will receive all the messages, but a method, described in FSAN, is used to make sure that only the intended ONT with a known identity will be able to "decrypt" and by then understand the messages sent by the OLT.

The "lightweight TR-069 client" can, instead of using a very long name in the message for parameter names present, use a label or identifier (the TR-069 handler would replace the long name by the label). This label can be stored in for instance a storage means comprised in the client. The lightweight TR-069 client does not comprise a XML parser, as TR-069 remote procedure call (RPC) methods can be parsed in the TR-069 handler and then are optimally encoded in the TR-069 handler (the XML parsing is done in the TR-069 handler). A lightweight TR-069 client does not need encryption, nor certification as those two can be handled by the TR-069 handler. The communication between the TR-069 handler and the ONT /ONU can happen on a specific channel for management which is secure and trusted based on network layers L1 and/or L2, as for instance described in the FSAN/ITU standard for communication in between an OLT and an ONT in a shared medium system, here for instance a PON system.

Fig. 1 illustrates an embodiment of the present invention, in which CPE devices (11, 12) being ONU/ONT devices are connected by means of a PON system to respective OLT's (211, 212) in an access node (2), the latter which is comprising a TR-069 handler module (21) according to aspects of the present invention. The TR-069 handler module (21) is adapted and arranged for setting up a TR-069 compliant sessions with the TR-069 compliant ACS (3), s1.

Between the CPE (lightweight client) and TR-069 handler module (comprised preferably in the access node) the use of a new protocol is proposed, which does not require or comprise encryption or certification at the TR-069 level (a). A specific management channel is used for this purpose between the ONT and the OLT. This is typically already present in L1/L2 networking levels, and those functionalities are therefore implemented at that level. The Tr-069 parameter_names are encoded (b), as well as the RPC messages (c).

It can be noted that the "lightweight TR-069 client" can, when compared to a fully compliant TR-069 client:
- instead of very long name for the RPC messages and/or parameters, use a label or identifiers (the TR-069 handler would replace the long name by the label)
- comprise no XML parser in the client, TR-069 RPC methods are optimally encoded (the XML parsing is done in the TR69 handler)
- comprise no use of encryption, nor of certification. The communication between the TR-69 handler and the CPE (ONU/ONT) can be performed on a specific management channel (which can be/is secure and trusted).

It can be noted that the "TR-069 handler" module or software agent can:
- communicate with one or more ACS's via the standardized TR-069 protocol - with optional encryption and certification.
- parse the XML messages directed towards the CPE (ONT), remove the SOAP messages and encode the message in an optimal way
- remove the long naming of the object (RPC message names and/or parameter names) by labels or identifiers, and can keep a table comprising these labels (label can be the same of all ONT/ONU), preferably stored in a handler data storage means.
- communicate with the Lightweight TR-069 client via a specific management channel.

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

Some functions have been mentioned herein. They can be implemented using software, firmware (for instance fixed logic circuitry), hardware, manual processing, or any combination of these implementations. The terms "module," "component", "functionality," and "logic" as generally represent software, firmware, hardware, or any combination thereof. In software implementation cases, the module, component, functionality, or logic represents program code that performs specified tasks when executed on one or more processor(s) (for instance any of microprocessors, controllers, and the like). The program code can be stored in at least one computer readable memory device or storage means. The methods and systems are platform-independent and they may thus be implemented on different platforms.

Methods according to embodiments of the present invention may also be described in the context of computer executable instructions. Computer executable instructions can include routines, programs, objects, components, data structures, procedures, modules, functions, and the like for performing certain functions or implement certain abstract data types. The methods described herein may also be applicable in a distributed computing environment where functions are performed by remote processing devices that are linked through a communications network. In a distributed computing environment, computer executable instructions may be located in both local and remote computer storage media, including memory storage devices.

## Claims

1. A method for automatically configuring a client premises equipment, CPE, by means of the remote management protocol TR-069 and at least one automatic configuration server, ACS, the latter which is connected to said CPE device by means of an intermediate network, **characterised in that** it comprises
- monitoring TR-069 sessions in a TR-069 handler module located in between said CPE and ACS;
- modifying the downstream and upstream messages related to said TR-069 session in said TR-069 handler; such that a protocol which does not require or comprise encryption or certification at the TR-069 level can be used between the CPE and the TR-069 handler.

2. A method according to claim 1, comprising compressing at least part of said downstream messages and decompressing at least part of said upstream messages in said handler module.

3. A method according to claim 2, further comprising decompressing/compressing said downstream/upstream messages respectively in said CPE.

4. A method according to claim 2 or 3, wherein compressing/decompressing comprises encoding/decoding respectively.

5. A method according to any one of the claims 2 to 4, wherein at least part of the downstream messages or the upstream messages related to the TR-069 session comprises message names.

6. A method according to any one of the claims 2 to 4, wherein at least part of the downstream messages or the upstream messages related to the TR-069 session comprises parameter names.

7. A method according to any of the previous claims 2 to 6, wherein said compression/decompression is based on redundancy of information in the TR-069 message due to already available information in said handler module and/or CPE from the networking layers layer 1 and/or layer 2.

8. A method according to any of said previous claims, further comprising encrypting/decrypting said upstream/downstream messages respectively in said handler module.

9. A method according to any of the previous claims, wherein said handler module is comprised in an access node of the home network of said CPE.

10. A method according to any of the previous claims, wherein said CPE and access node are comprised in a PON.

11. A handler module adapted for being arranged in between a client premises equipment, CPE, device and automatic configuration server, ACS, adapted for remotely configuring said CPE, **characterised in that** it comprises
a. a means for monitoring TR-069 sessions passing through said handler module;
b. a means for modifying said TR-069 messages corresponding to said TR-069 sessions in said handler module; such that a protocol which does not require or comprise encryption or certification at the TR-069 level can be used between the CPE and the TR-069 handler.

12. A handler module according to claim 11, wherein said handler module is adapted for compressing/decompressing and/or encoding/decoding said TR-069 messages downstream/upstream respectively.

13. An handler module according to claim 11 or 12, comprising a means for setting up and maintaining TR-069 sessions with at least one TR-069 compliant ACS.

14. An access node, comprising a handler module according to any one of the claims 11 to 13.

## Patentansprüche

1. Verfahren zum automatischen Konfigurieren eines Kundenendgeräts, CPE, mittels des Fernverwaltungsprotokolls TR-069 und mindestens eines automatischen Konfigurationsservers, ACS, wobei Letzterer mit dem besagten CPE-Gerät mittels eines Zwischennetzwerks verbunden ist, **dadurch gekennzeichnet, dass** es Folgendes umfasst:
- Überwachen von TR-069-Sitzungen in einem TR-069-Hantierungsbaustein, der sich zwischen dem besagten CPE und ACS befindet;
- Ändern der Abwärts- und Aufwärtsnachrichten, die zu der besagten TR-069-Sitzung in dem besagten TR-069-Hantierungsbaustein gehören; so dass ein Protokoll, das keine Verschlüsselung oder Zertifizierung auf der TR-069-Ebene erfordert oder umfasst, zwischen dem CPE und dem TR-069-Hantierungsbaustein verwendet werden kann.

2. Verfahren nach Anspruch 1, umfassend das Komprimieren von mindestens einem Teil der besagten Abwärtsnachrichten und das Dekomprimieren von mindestens einem Teil der besagten Aufwärtsnachrichten in dem besagten Hantierungsbaustein.

3. Verfahren nach Anspruch 2, weiterhin umfassend das Dekomprimieren/Komprimieren jeweils der besagten Abwärts-/Aufwärtsnachrichten in dem besagten CPE.

4. Verfahren nach Anspruch 2 oder 3, wobei das Komprimieren/Dekomprimieren jeweils Codieren/Decodieren umfasst.

5. Verfahren nach einem beliebigen der Ansprüche 2 bis 4, wobei mindestens ein Teil der Abwärtsnachrichten oder der Aufwärtsnachrichten, die zu der TR-069-Sitzung gehören, Nachrichtennamen umfasst.

6. Verfahren nach einem beliebigen der Ansprüche 2 bis 4, wobei mindestens ein Teil der Abwärtsnachrichten oder der Aufwärtsnachrichten, die zu der TR-069-Sitzung gehören, Parameternamen umfasst.

7. Verfahren nach einem beliebigen der vorstehenden Ansprüche 2 bis 6, wobei das besagte Komprimieren/Dekomprimieren auf einer Informationsredundanz in der TR-069-Nachricht aufgrund bereits verfügbarer Informationen in dem besagten Hantierungsbaustein und/oder CPE aus den Netzwerkschichten Schicht 1 und/oder Schicht 2 basiert.

8. Verfahren nach einem beliebigen der besagten vorstehenden Ansprüche, weiterhin umfassend das Verschlüsseln/Entschlüsseln jeweils der besagten Aufwärts-/Abwärtsnachrichten in dem besagten Hantierungsbaustein.

9. Verfahren nach einem beliebigen der vorstehenden Ansprüche, wobei der besagte Hantierungsbaustein in einem Zugangsknoten des Heimnetzwerks des besagten CPE enthalten ist.

10. Verfahren nach einem beliebigen der vorstehenden Ansprüche, wobei das besagte CPE und der Zugangsknoten in einem PON enthalten sind.

11. Hantierungsbaustein, der angepasst ist, um zwischen einem Kundenendgerät, CPE, und automatischen Konfigurationsserver, ACS, angeordnet zu werden, der zur Fernkonfiguration des besagten CPE angepasst ist, **dadurch gekennzeichnet, dass** er Folgendes umfasst:
a. ein Mittel zum Überwachen von TR-069-Sitzungen, die über den besagten Hantierungsbaustein laufen;
b. ein Mittel zum Ändern der besagten TR-069-Nachrichten entsprechend den besagten TR-069-Sitzungen in dem besagten Hantierungsbaustein; so dass ein Protokoll, das keine Verschlüsselung oder Zertifizierung auf der TR-069-Ebene erfordert oder umfasst, zwischen dem CPE und dem TR-069-Hantierungsbaustein verwendet werden kann.

12. Hantierungsbaustein nach Anspruch 11, wobei der besagte Hantierungsbaustein angepasst ist zum Komprimieren/Dekomprimieren und/oder Codieren/Decodieren jeweils der besagten TR-069-Abwärts-/Aufwärtsnachrichten.

13. Hantierungsbaustein nach Anspruch 11 oder 12, umfassend ein Mittel zum Einrichten und Aufrechterhalten von TR-069-Sitzungen mit mindestens einem TR-069-konformen ACS.

14. Zugangsknoten, umfassend einen Hantierungsbaustein nach einem beliebigen der Ansprüche 11 bis 13.

## Revendications

1. Procédé pour configurer automatiquement un équipement des locaux de client, CPE, au moyen du protocole de gestion à distance TR-069 et d'au moins un serveur de configuration automatique, ACS, ce dernier étant connecté audit dispositif CPE au moyen d'un réseau intermédiaire, **caractérisé en ce qu'**il comprend les étapes suivantes
- surveiller des sessions TR-069 dans un module de gestionnaire TR-069 localisé entre lesdits CPE et ACS ;
- modifier les messages aval et amont liés à ladite session TR-069 dans ledit gestionnaire TR-069 ; de sorte qu'un protocole qui ne requiert ou ne comprend pas de chiffrement ou de certification au niveau TR-069 puisse être utilisé entre le CPE et le gestionnaire TR-069.

2. Procédé selon la revendication 1, comprenant la compression d'au moins une partie desdits messages aval et la décompression d'au moins une partie desdits messages amont dans ledit module de gestionnaire.

3. Procédé selon la revendication 2, comprenant en outre la décompression/compression desdits messages aval/amont respectivement dans ledit CPE.

4. Procédé selon la revendication 2 ou 3, dans lequel la compression/décompression comprend l'encodage/décodage respectivement.

5. Procédé selon l'une quelconque des revendications 2 à 4, dans lequel au moins une partie des messages aval ou des messages amont liés à la session TR-069 comprend des noms de message.

6. Procédé selon l'une quelconque des revendications 2 à 4, dans lequel au moins une partie des messages aval ou des messages amont liés à la session TR-069 comprend des noms de paramètre.

7. Procédé selon l'une quelconque des revendications 2 à 6 précédentes, dans lequel ladite compression/décompression est basée sur la redondance d'informations dans le message TR-069 due à des informations déjà disponibles dans le module de gestionnaire et/ou CPE en provenance des couches de mise en réseau couche 1 et/ou couche 2.

8. Procédé selon l'une quelconque desdites revendications précédentes, comprenant en outre le chiffrement/déchiffrement desdits messages amont/aval respectivement dans ledit module de gestionnaire.

9. Procédé selon l'une quelconque des revendications précédentes, dans lequel ledit module de gestionnaire est compris dans un noeud d'accès du réseau domestique dudit CPE.

10. Procédé selon l'une quelconque des revendications précédentes, dans lequel lesdits CPE et noeud d'accès sont compris dans un PON.

11. Module de gestionnaire adapté pour être agencé entre un dispositif d'équipement des locaux de client, CPE, et un serveur de configuration automatique, ACS, adapté pour configurer à distance ledit CPE, **caractérisé en ce qu'**il comprend
a. un moyen pour surveiller des sessions TR-069 traversant ledit module de gestionnaire ;
b. un moyen pour modifier lesdits messages TR-069 correspondant auxdites sessions TR-069 dans ledit module de gestionnaire ; de sorte qu'un protocole qui ne requiert ou ne comprend pas de chiffrement ou de certification au niveau TR-069 puisse être utilisé entre le CPE et le gestionnaire TR-069.

12. Module de gestionnaire selon la revendication 11, dans lequel ledit module de gestionnaire est adapté pour compresser/décompresser et/ou encoder/décoder lesdits messages TR-069 en aval/en amont respectivement.

13. Module de gestionnaire selon la revendication 11 à 12, comprenant un moyen pour établir et maintenir des sessions TR-069 avec au moins un ACS conforme à TR-069.

14. Noeud d'accès, comprenant un module de gestionnaire selon l'une quelconque des revendications 11 à 13.
